# EUROPÄISCHE PATENTSCHRIFT

(11) **EP 3 107 401 B1**
(45) Veröffentlichungstag und Bekanntmachung des Hinweises auf die Patenterteilung: **26.09.2018**
(21) Anmeldenummer: 15707560.7
(22) Anmeldetag: 09.02.2015
(51) Int. Cl.: A23C 19/06, A23C 19/068, A23C 19/082, A23C 19/09

(54) **VERFAHREN ZUM HERSTELLEN EINES FASERIGEN KÄSEPRODUKTES**
METHOD FOR PRODUCING A FIBROUS CHEESE PRODUCT
PROCÉDÉ DE FABRICATION D'UN PRODUIT FROMAGER FIBREUX

(30) Priorität: 19.02.2014 DE 102014102145
(43) Veröffentlichungstag der Anmeldung: 28.12.2016
(73) Patentinhaber: Hochland SE, 88178 Heimenkirch (DE)
(72) Erfinder: HAUBER, Konrad, 88430 Rot an der Rot (DE); TARCSAI, Kalman, A-6890 Lustenau (AT)
(74) Vertreter: Patentanwälte Behrmann Wagner PartG mbB
(86) Internationale Anmeldenummer: PCT/EP2015/052653
(87) Internationale Veröffentlichungsnummer: WO 2015/124453

(56) Entgegenhaltungen:
- EP-A1- 2 052 625
- WO-A1-01/49123
- WO-A1-99/21430
- WO-A1-2012/156771
- WO-A2-2006/026811
- US-A- 5 104 675
- US-A- 5 750 177
- US-A1- 2009 226 580
- US-B1- 6 440 481

## Beschreibung

Die Erfindung betrifft ein Verfahren zum Herstellen eines faserigen Käseproduktes, insbesondere mit guten Schmelzeigenschaften für den Heißverzehr, beispielsweise auf einer Pizza, einem Nudelgericht, einem Gratin, Toast oder Burger gemäß dem Oberbegriff des Anspruchs 1.

Es ist bekannt, für die sogenannte "heiße Küche" Pasta-Filata-Käse, insbesondere Mozzarella einzusetzen, da dieser im Vergleich zu Schmelzkäse sehr temperaturbeständig ist und ein gutes Schmelzverhalten aufweist. So zeichnet sich Mozzarella durch ein "Fadenziehen" aus und dadurch, dass beim Überbacken keine Hautbildung zu beobachten ist. Ferner zeichnet sich Mozzarella durch ein gewünschtes, leichtes "Ausölen" bei Erhitzung aus. Bei Pasta-Filata-Käse handelt es sich um einen sogenannten Brühkäse, zu dessen Herstellung Käsebruch aus der Molke gehoben und mit heißem Wasser überbrüht wird, wobei der heiße Käsebruch unter Rühren, Kneten und Stretchen (Ziehen) zu einer faserigen Käsemasse verarbeitet wird. Diese wird meist zu einer Kugel oder einem Zopf geformt und dann in einem kalten Salzwasserbad abgekühlt. Der Einsatz von Pasta-Filatakäse hat sich bewährt - jedoch ist Mozzarella geschmacklich im Regelfall vergleichsweise mild und es stehen keine sich stark unterscheidenden Geschmacksvarianten wie bei anderen, bakteriell gereiften Naturkäsen zur Verfügung.

Anstelle von Pasta-Filata ist es bekannt, bakteriell gereifte Naturkäse in der "heißen Küche" einzusetzen, insbesondere Gouda, Edamer oder Maasdamer-Käse. Diese haben ebenfalls ein vergleichsweise gutes Schmelzverhalten.

Pasta-Filata-Käse sowie bakteriell gereifte Käse zeichnen sich im Gegensatz zu Schmelzkäse durch ein natürlicheres Mundgefühl aus - insbesondere kommt es nicht zu einem "Kleben" am Gaumen oder an den Zähnen, wie dies bei Schmelzkäse der Fall ist. Nachteilig an Pasta-Filatakäsen und naturgereiften Käsen ist jedoch, dass das Formen und Verpacken in der Regel batchweise erfolgt während Schmelzkäse auf beispielsweise aus der WO 2005/000012 A1 bekannten Vorrichtungen kontinuierlich verarbeitet, d.h. geformt, gekühlt und inline verpackt werden kann.

Es besteht Bedarf an einem neuartigen Käseprodukt, welches sich im Gegensatz zu Schmelzkäse durch eine hohe Temperaturbeständigkeit, ein optimales Schmelzverhalten und natürliches Mundgefühl auszeichnet und dabei Textureigenschaften (Faserigkeit) von Pasta-Filata-Käsen mit Geschmacksvarianten von bakteriell gereiften Käsen kombiniert. Bevorzugt sollte das erfindungsgemäße Käseprodukt zumindest weitgehend kontinuierlich kühl-, form- und bevorzugt auch abpackbar sein wie Schmelzkäse.

Aus der US 5,902,625 ist ein Verfahren zur Herstellung eines faserigen Käses mit Pasta-Filataeigenschaften bekannt geworden, wobei zur Herstellung dieses Käses Käsebruch (sogenannter curd) erhitzt, geknetet und gestretcht (gezogen) wird, bis eine faserige Käsemasse erhalten wird. Nach Abschluss des mechanischen Bearbeitungsvorgangs kann der Käsemasse gemäß der Lehre des Dokumentes zur Geschmackseinstellung Käsepulver in geringen Mengen zugegeben werden, wobei die Druckschrift als vorteilhaft herausstellt, zusätzlich Schmelzsalze hinzuzugeben. Wesentlicher Bestandteil des bekannten Verfahrens ist die für Pasta-Filata-Käse typische Abkühlung in Salzlake. Durch dieses Verfahren wird zwar ein Pasta-Filata-Käse mit größerer Geschmacksvarianz erhalten - der Gewichtsanteil an entsprechenden Geschmacksgebern (Käsepulvern) ist jedoch verfahrensbedingt gering. Darüber hinaus erscheint der Einsatz von Schmelzsalze notwendig.

Aus der EP 2 052 625 A1 ist es bekannt, Käsebruch und mittelreifen Käse zu mischen und diese Mischung zu erhitzen und zu stretchen, wobei das Erhitzen unter Dampfzugabe erfolgt. Bei den bekannten Verfahren ist es notwendig, die Käsemasse bei 18°C und 20°C für ein bis sechs Tage zu lagern. Während dieser Lagerung reift die Käsemasse aufgrund von zuvor zugegebenen Starterkulturen. Nach der bakteriellen Reifung ist es zur Ausbildung der gewünschten Pasta-Filata-Textur notwendig, die gereifte Käsemasse erneut für eine Woche, diesmal zwischen 5°C und 9°C zu lagern, was eine Batchverarbeitung zwingend erforderlich macht. Bei gegebenem Verfahren und Zusammensetzungen ist die Lagerung bei der vorgenannten Temperatur zwingend notwendig, um die gewünschte Textur zu erzeugen; dies wird als nachteilig empfunden.

Aus der WO 2001/49123 A1 ist ein Verfahren zur Herstellung von Schmelzkäse bekannt, welches zwingend die Zugabe von Schmelzsalzen erfordert. Ausgangspunkt für den mechanischen Bearbeitungsschritt zum Erhalt einer fibrösen Käsemasse ist dabei Käsebruch, der die Hauptzutat darstellt und welchem geringe Mengen an getrocknetem Käsepulver zugesetzt werden können. Durch den Zusatz von Schmelzsalzen resultiert ein Endprodukt mit verbesserungsbedürftigen Schmelz- und Mundgefühlseigenschaften.

Die WO 2006/026811 A2 beschreibt ein kontinuierliches Verfahren zur Herstellung von Pasta-Filata-Käsen aus Käsebruch.

Die US 4,919,943 A beschreibt ein Verfahren zur Herstellung von Pasta-Filata-Käse, bei welchem eine flüssige Mischung aus Kasein und Molkenprotein hergestellt wird.

Die WO 1999/21430 A beschreibt ein Verfahren zur Herstellung von Käse unter Vakuum ausschließlich auf Basis von Käsebruch.

Die US 5,750,177 A beschreibt ein Verfahren zum Herstellen eines homogenen Schmelzkäses ohne den Einsatz von Schmelzsalzen. Die Schmelzsalze werden ersetzt durch einen hohen Anteil an Molkenproteinen, wobei gemäß der in dem Dokument beschrieben Erfindung das Gewichtsverhältnis zwischen Molkenproteinen und Kasein mindestens 1:16, bevorzugt 1:8 oder noch höher beträgt. Aus dem beschriebenen Herstellungsverfahren resultiert eine homogene Schmelzkäsemasse, was insbesondere dem hohen Anteil an Molkeproteinen geschuldet ist. Wesentlich bei dem bekannten Verfahren ist es die Temperatureinwirkung während des Herstellungsprozesses so gering zu halten, dass eine Denaturierung des Molkenproteins verhindert wird. Mit dem bekannten Verfahren kann kein Käse mit fasriger Textur erhalten werden.

Die EP 0 535 728 A2 beschreibt ein Verfahren zur Herstellung von Käse auf Basis eines hohen Anteils von ungereiftem Käse bzw. Käsebruch. Zielsetzung des bekannten Verfahrens ist es ein Käseprodukt mit einer Naturkäsestruktur, d.h. einer gerade nicht-fasrigen Struktur, herzustellen. In der Anmeldung ist offenbart, dass im Rahmen des Verfahrens eine Erhitzung bis maximal 65°C, bevorzugt zwischen 45°C und 55°C erfolgt.

Die US 4,552,774 A beschreibt ein Verfahren zum Herstellen eines käseähnlichen Produktes mit einer weichen, nicht-körnigen Struktur.

Die WO 01/49123 A1 beschreibt ein Verfahren zum Herstellen eines Pasta-Filata-Käses auf Basis von Käsebruch.

Aus der US 5,104,675 A ist ein Verfahren bekannt, bei dem gereifter Mozzarella mit gereiftem Cheddar unter Dampfeinwirkung verkneten wird. Es findet kein Kontakt mit Salzwasser während des Abkühlens statt. Es wird Natriumzitrat als Schmelzsalz zugesetzt.

Die WO 2012/156771 A1 offenbart die Herstellung von Low-Fett-Mozzarella, bei welchem Mozzarella (100% der Käseausgangsmasse) mit einer verdickenden Mischung, enthaltend Proteine, Milchpulver, Schmelzsalze unter Dampfeinwirkung verknetet wird. Das fertige Produkt wird direkt verpackt und gekühlt. Es resultiert ein Schmelzkäse.

Die US 6,440,481 B1 beschreibt das Verkneten und Stretchen von frischem Käsebruch und bakteriell gereiftem Käsebruch unter Dampfeinwirkung in Prozesskochern.

Die US 2009/226580 A1 beschreibt ein Verfahren zur Herstellung eines Lebensmittels auf Basis von Käsebruch unter Zugabe einer Proteinquelle zum Käsebruch.

Ausgehend von dem bekannten Stand der Technik liegt der Erfindung die Aufgabe zugrunde, ein Verfahren zur Herstellung eines in der Art eines Pasta-Filata-Käses faserigen Käseproduktes, insbesondere für den Heißverzehr, d.h. für die heiße Küche anzugeben, das sich durch gute Schmelzeigenschaften, ein natürliches Mundgefühl und verschiedene einfach realisierbare Geschmacksvarianten (von mild bis würzig) auszeichnet, wobei bevorzugt das Kühlen, Formen und Abpacken kontinuierlich ohne eine notwendige Zwischenlagerung erfolgen können soll. Insbesondere soll eine schnelle Weiterverarbeitung der Käsemasse, bevorzugt inline, nach der mechanischen Bearbeitung bis in die Endverpackung möglich sein. Bevorzugt soll sich das Produkt durch eine Kombination der Vorteile der Herstellung eines klassischen Schmelzkäses mit den guten Textur-, Schmelz- und Mundgefühleigenschaften und den unterschiedlichen Geschmacksvariationen eines Naturkäses auszeichnen.

Diese Aufgabe wird mit einem Verfahren mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, einem Käseausgangsmaterial, das zumindest 50 Gew-%, vorzugsweise zu mindestens 60 Gew-%, noch weiter bevorzugt zu mindestens 70 Gew-%, besonders bevorzugt zu mindestens 80 Gew-%, noch weiter bevorzugt zu mindestens 90 Gew. %, ganz besonders bevorzugt zu 100 Gew-% aus einem bakteriell gereiften Käse und/oder einem Brühkäse (Pasta-Filata-Käse), vor und/oder während einem Erhitzungs- und mechanischem Bearbeitungsvorgangs, bei welchem das Käseausgangsmaterial geknetet und gestretcht (gezogen) wird, eine Proteinquelle, nämlich Molkenprotein und/oder Milchprotein zuzusetzen, um somit die Eigenschaften der heißen Käsemasse, insbesondere in Abhängigkeit der beabsichtigten weiteren Bearbeitung einzustellen. Insbesondere wird durch die Zugabe der Proteinquelle mit einem Gewichtsanteil der in Pulverform zuzugebenden Proteinquelle bezogen auf die fertige Käsemasse zwischen 0,5 Gew-% und 7 Gew-%, ganz besonders bevorzugt zwischen 1 Gew-% und 5 Gew-%. erreicht, dass unmittelbar aus dem vorerwähnten, mechanischen Bearbeitungsschritt, bei dem das Käseausgangsmaterial geknetet und gestretcht wird (Filierungsprozess), eine Käsemasse mit einer faserigen Textur in der Art eins Pasta-Filata-Käses erhalten wird, ohne dass es, wie in der EP 2 052 625 A1 beschrieben ist hierfür notwendig ist, zum Erhalten der faserigen Struktur die Käsemasse für etwa eine Woche bei geringer Temperatur zu lagern und davor bakteriell reifen zu lassen, was wiederum die Zugabe einer Starterkultur voraussetzt, auf welche bei dem erfindungsgemäßen Verfahren verzichtet werden kann und bevorzugt in Weiterbildung der Erfindung auch verzichtet wird. Überraschender Weise wird durch die Zugabe der Proteinquelle, insbesondere bei Nichtüberschreiten eines Molkeprotein-Kasein-Gewichtsverhältnisses von 1:20, bevorzugt 1:30, bei den weiteren anspruchsgemäßen Verfahrensmerkmalen die faserige Struktur bereits vor einem Kühlschritt erreicht, so dass auf eine Lagerung oder gar eine vorhergehende Reifung verzichtet werden kann. Darüber hinaus ermöglicht die Proteinquelle die Einhaltung vergleichsweise hohen Temperaturen von 60°C oder mehr bei der Durchführung des mechanischen Bearbeitungsschrittes. Wesentlich ist dabei, dass die Zugabe der Proteinquelle vor Abschluss der mechanischen Bearbeitung erfolgt, um durch eine entsprechende Durchmischung bei hohen Temperaturen ausreichend Einfluss auf die Eigenschaften nehmen zu können und um hierdurch (ohne Lagerung und/oder bakterielle Reifung) eine faserige, homogene Käsemasse, ohne Phasentrennung (Fett, Eiweiß und Wasser) zu erhalten, die sich in der Art eines Schmelzkäses, insbesondere mittels einer Kühlbandvorrichtung, wie diese in der WO 2005/000012 A1 beschrieben ist, insbesondere mit integrierten oder anschließenden Formmitteln zur Scheiben-, Würfel-, oder Stiftformung bearbeiten zu können. Die aus der WO 2005/000012 A1 bekannte Kühlbandvorrichtung soll zur Vermeidung von Wiederholungen als zur Offenbarung der vorliegenden Anmeldung gehörig offenbart und im Zusammenhang mit der Inline-Bearbeitung der Käsemasse beanspruchbar sein.

Ein wesentliches Merkmal der Erfindung ist der Schritt b), bei dem das Käsematerial erhitzt, geknetet und gestretcht wird. Bei diesem Schritt handelt es sich um das grundsätzlich von der Pasta-Filata-Käseherstellung bekannte filieren (Filatura bzw. Textierung), insbesondere in einem Wellenkocher, bei dem es sich um eine Knet-Zieh-Einrichtung handelt. Die fasrige Textur resultiert aus der Erwärmung und dem gleichzeitigen Kneten und Ausdehnen, also aus der mechanischen Scherung bei gleichzeitiger Wärmeeinwirkung. Im Gegensatz zur Pasta-Filata-Herstellung wird erfindungsgemäß nicht oder nur in geringen Anteilen Käsebruch eingesetzt sondern, wie erwähnt, ein Käseausgangsmaterial mit einem Mindestgewichtsanteil an bakteriell gereiftem Käse und/oder an Pasta-Filata-Käse von 50 Gew.-% oder höher. Besonders bevorzugt beträgt die Temperatur bei dem Filierungsprozess mindestens einer Pasteurisationstemperatur von 73°C und ist bevorzugt höher als diese und beträgt besonders bevorzugt zwischen 74°C und 90°C, ganz besonders bevorzugt zwischen 80°C und 90°C. Das Erreichen der gewünschten Fasrigkeit, d.h. einer optimalen Filierbarkeit kann durch Ziehproben ermittelt werden, wobei der Käse sich durch Auseinanderziehen einer Probe zu einem dünnen Faden verlängert. Unter der gewünschten fasrigen Textur wird verstanden, dass der resultierende Käse fasrig ist, d.h. es sind einzelne, insbesondere gerichtete bzw. parallele Fasern zu erkennen und der Käse ist filierbar, d.h. von Hand in einzelne Fasern oder Fasergruppen abziehbar. Anders ausgedrückt besteht die abgekühlte Masse aus einer Vielzahl von miteinander verbundenen bzw. verklebten Fasern (Fäden), wobei einzelne Fasern oder Fasergruppen von Hand, insbesondere in der Längsrichtung der Fasern von einem Block oder einer Scheibe ablösbar sind.

Wie erläutert enthält das Käseausgangsmaterial ein Mindestgewichtsanteil von 50Gew.-% an Käse. Unter Käse wird dabei ein fertiger Käse, d.h. nicht ein Käsebruch, verstanden. Der Mindestgewichtsanteil von 50Gew.-% kann sich zusammensetzen aus bakteriell gereiftem Käse und/oder Pasta-Filata-Käse. Dies bedeutet, dass der vorgenannte Gewichtsanteil aus nur einem Käse oder alternativ auch aus Mischungen zusammengesetzt sein kann. Dabei kann für den Fall des Einsatzes von Pasta-Filata-Käse bakteriell gereifter Pasta-Filata-Käse und/oder säuregefällter Pasta-Filata Käse zum Einsatz kommen. Wichtig ist, dass es sich um fertigen Pasta-Filata-Käse handelt, also nicht lediglich um gepressten Käsebruch, sondern um einen Käse, der den Pasta-Filata-typischen Filierungsprozess im heißen Wasser durchlaufen hat und somit eine fasrige Textur aufweist. Im Gegensatz zu Pasta-Filata-Käse hat gepresster Käsebruch keine zusammenhängende bzw. feste Struktur und weist keine fasrigen, Pasta-Filata-typische Textur auf. Mangels Filierungsprozess hat bei Käsebruch im Gegensatz zu Pasta-Filata-Käse keine physikalische Umstrukturierung der Eiweiße stattgefunden, die auf die Hitzeeinwirkung und die mechanische Bearbeitung beim Filierungsprozess zur Pasta-Filata-Herstellung zurückzuführen sind. Ganz besonders bevorzugt ist eine Ausführungsform bei der der vorerwähnte Mindestgewichtsanteil ausschließlich durch gereiften Käse, bevorzugt bakteriell gereiften Käse (Naturkäse und/oder Pasta-Filata-Käse) bereitgestellt wird. Weiter bevorzugt enthält das Käseausgangsmaterial ausschließlich gereiften, insbesondere ausschließlich bakteriell gereiften, Käse. Noch weiter bevorzugt handelt es sich bei diesem gereiften Käse nicht um Pasta-Filata-Käse, d.h. gemäß dieser Weiterbildung enthält das Käseausgangsmaterial keinen Pasta-Filata-Käse (weder bakteriell gereiften Pasta-Filata-Käse, noch säuregefällten Pasta-Filata-Käse).

Die Zugabe der Proteinquelle ist zudem von Vorteil, um die Käsemasse für die weitere Bearbeitung zu stabilisieren, ganz besonders bevorzugt im Hinblick auf eine inline-Scheibenherstellung, bevorzugt mit einer aus der WO 2005/00012 A1 bekannten Kühlbandvorrichtung, wobei hierzu die noch heiße Käsemasse der entsprechenden Vorrichtung unmittelbar nach Schritt b) zugeführt wird. Als Proteinquelle soll grundsätzlich Molkeprotein und/oder Milcheiweiß eingesetzt werden, insbesondere in Pulverform. Wie später noch erläutert werden wird ist es bevorzugt, wenn die Menge an Molkenprotein, insbesondere im Verhältnis zur Menge an vorhandenem Kasein, gering ist. Bevorzugt wird als Proteinquelle Milcheiweißpulver eingesetzt. Milcheiweißpulver enthält neben etwa 80% Milcheiweiß rund 20% Molkeprotein.

Besonders vorteilhaft hat es sich herausgestellt, wenn der Feuchtigkeitsgehalt des eingesetzten bakteriell gereiften Käses und/oder des eingesetzten Pasta-Filata-Käses größer ist als 30 Gew-% (bezogen auf das Gesamtgewicht des jeweiligen Ausgangskäses). Besonders bevorzugt wird ein fertiger Käse (ein bakteriell gereifter Käse und/oder ein Brühkäse) mit einem Feuchtigkeitsgehalt aus einem Gew-%-Bereich zwischen 35 Gew-% und 55 Gew% eingesetzt.

Bevorzugt beträgt der Gewichtsanteil an Käseausgangsmaterial in der Käsemasse zumindest 50 Gew-%, bevorzugt mindestens 60 Gew-%, ganz besonders bevorzugt zwischen 65 und 80 Gew-%, oder mehr.

Neben der Zugabe der Proteinquelle vor oder während des anspruchsgemäßen Schrittes b) ist es wesentlich, dass die heiße Käsemasse nicht wie klassischer Brühkäse in Salzwasser in unmittelbaren Kontakt zum Salzwasser gekühlt und/oder in Kontakt zu Salzwasser gelagert wird, da kein klassischer Brühkäse (Pasta-Filata-Käse) erhalten werden soll, sondern lediglich ein Käseprodukt, welches hinsichtlich der Textur Pasta-Filata-Eigenschaften aufweist, sowie gute Schmelz- und Mundgefühleigenschaften, sich jedoch vorteilhaft wie ein Schmelzkäse verarbeiten lässt, insbesondere indem die heiße Käsemasse nach dem bevorzugt als Batchprozess durchgeführten Verfahrensschritt b) abgekühlt und geformt und vorzugsweise dann unmittelbar, d.h. ohne längere oder bevorzugt ohne jegliche Zwischenlagerung in diesem Kontakt zu Salzlake oder einem Wasserbad verpackt wird, insbesondere in einer InertgasAtmosphäre. Unter dem Merkmal "nicht in Salzwasser gekühlt" ist dabei zu verstehen, dass kein unmittelbarer Kontakt der heißen Käsemasse mit Salzwasser, oder bevorzugt mit jeglichem Wasser, zu Kühlzwecken erfolgt. Selbstverständlich möglich und unschädlich wäre eine Kühlung mit Salzwasser oder sonstigem Wasser, wenn die heiße Käsemasse entsprechend verpackt und somit ein unmittelbarer Wasserkontakt vermieden wird, d.h. wenn das Wasser nur die Funktion als Kälteenergieträger hat.

Das Merkmal "nicht in Salzwasser (oder sonstigem Wasser) gelagert" ist analog zu verstehen, d.h. eine Lagerung in Wasser im verpackten Zustand wäre grundsätzlich möglich.

Die Käsemasse kann beispielsweise in Gasatmosphäre, insbesondere mit gekühlter Luft, oder mit ungekühlter Luft gekühlt werden, wobei eine Kühlung, wie später noch erläutert werden wird, mittels sogenannter Kühlbandvorrichtungen möglich ist, bei denen das oder die Kühlbänder rückseitig bevorzugt mittels Wasser oder dgl. Kühlmedien gekühlt werden.

Das nach dem Konzept der Erfindung ausgebildete Verfahren kommt ohne den Zusatz von Schmelzsalzen aus, wie sie beispielsweise bei dem aus der WO 2001/49123 A1 bekannten Verfahren zwingend sind. Gemäß der Erfindung wird vollständig auf den Zusatz von Schmelzsalzen verzichtet, da Schmelzsalze dem gewünschten Ziel, Schmelzeigenschaften und Mundgefühleigenschaften eines Naturkäses zu imitieren zuwiderlaufen würden. Unter anderem durch die geringe Menge an Käsebruch und bevorzugt Verzicht auf Käsebruch bei gleichzeitiger Zugabe der Proteinquelle, kann überraschend auf Schmelzsalze verzichtet werden.

Das erfindungsgemäße Verfahren kommt zudem auch ohne den Zusatz von Säureregulatoren aus, auf die weiterbildungsgemäß verzichtet wird.

Ebenso kommt das vorgeschlagene Verfahren ohne den Einsatz von Starterkulturen aus, wie sie bei dem aus der EP 2 052 625 A1 bekannten Verfahren eingesetzt werden. Auf solche Starterkulturen, auch in der Form von Sporen wird bevorzugt vollständig verzichtet, insbesondere da auch entsprechende Reifetemperaturen bei dem vorgeschlagenen Verfahren nicht vorgesehen sind.

Wie bereits angedeutet ist es besonders bevorzugt, wenn ein Molkeprotein/Kasein-Gewichtsverhältnis der Käsemasse von 1:20, bevorzugt 1:30 nicht überschritten wird. Anders ausgedrückt wird der Proteingehalt durch Zugabe der Proteinquelle, insbesondere in Pulverform, so eingestellt, dass ein maximales Molkeprotein/Kasein-Gewichtsverhältnis von 1:20, bevorzugt 1:30 nicht überschritten wird. Ganz besonders bevorzugt wird das vorgenannte Gewichtsverhältnis auf einen Verhältniswert zwischen 1:20 und 1:80, noch weiter bevorzugt zwischen 1:30 und 1:80, ganz besonders bevorzugt zwischen 1:40 und 1:80 eingestellt. Grundsätzlich ist es möglich, als Proteinquelle auch Molkeproteinpulver einzusetzen, wobei bevorzugt auf Molkeproteinpulver als Proteinquelle verzichtet wird. Für den Fall der Zugabe von Molkeproteinpulver als Proteinquelle sollte die Menge so gewählt sein, dass vorgenannte Bedingungen hinsichtlich des Molkeprotein/Kasein-Gewichtsverhältnisses erfüllt sind. Bevorzugt wird als Proteinquelle, ganz besonders bevorzugt ausschließlich, Milchpulver und/oder Magermilchpulver eingesetzt. Üblicherweise enthält Milchpulver bzw. Magermilchpulver neben einem Milchproteinanteil von 80% auch einen Molkeproteinanteil von 20%. Die Zugabe ist bevorzugt so zu bemessen, dass die vorerwähnten Bedingungen hinsichtlich des Molkeprotein/Kasein-Gewichtsverhältnisses erfüllt sind. Das zum Einsatz kommende Molkeprotein kann bereits denaturiert sein und/oder wird bevorzugt während des Erhitzschrittes denaturiert - anders ausgedrückt werden die Temperaturen für den Filierprozess (Erhitzen, Kneten und Stretchen) des Käsematerials unter Erhalt der Käsemasse so eingestellt, dass eine Denaturierung des Molkeproteins erfolgt.

Wesentlich ist, dass die Molkeproteinmenge so gering ist, dass aus dem Filierprozess die gewünschte fasrige Textur resultiert. Bevorzugt beträgt der Gewichtsanteil an Molkeproteinen an der Käsemasse weniger als 2%, noch weiter bevorzugt weniger als 1%.

Bevorzugt wird die Käsemasse bei dem anspruchsgemäßen Abkühlschritt d) auf eine Temperatur von unter 10°C abgekühlt, bevorzugt auf eine Temperatur von weniger als 8°C, noch weiter bevorzugt auf eine Temperatur zwischen 1°C und 7°C, ganz besonders bevorzugt auf eine Temperatur zwischen 4°C und 6°C, wobei die Käsemasse weiterbildungsgemäß in weniger als 24 Stunden, vorzugsweise in weniger als zwölf Stunden, weiter bevorzugt in weniger als sechs Stunden, noch weiter bevorzugt in weniger als zwei Stunden, noch weiter bevorzugt in weniger als einer Stunde, ganz besonders bevorzugt unmittelbar nach dem Schritt c) auf eine der vorgenannten Temperaturen abgekühlt wird.

Grundsätzlich kann das Käseausgangsmaterial auch Käsebruch (curd) umfassen, wobei der Gewichtsanteil an Käsebruch bezogen auf das Käseausgangsmaterial geringer sein muss als 20 Gew-%, um mit den gegebenen Verfahrensschritten und sonstigen Zutaten bereits nach dem mechanischen Bearbeitungsschritt b) und unter Verzicht auf Schmelzsalze eine faserige, homogene Käsemasse, ohne Phasentrennung zu erhalten. Besonders bevorzugt ist es, wenn der Gewichtanteil des Käsebruchs am Käseausgangsmaterial (bevorzugt deutlich) weniger beträgt als 10 Gew-%, ganz besonders bevorzugt weniger beträgt als 5 Gew-%. Idealerweise ist das Käseausgangsmaterial käsebruchfrei.

Grundsätzlich ist es bevorzugt, das Verfahren ohne die Zugabe von einer Polysaccharidquelle, bevorzugt Stärke, d.h. einer Stärkequelle durchzuführen, was insbesondere vorteilhaft realisiert werden kann, wenn die heiße Käsemasse in Form von Blöcken, Würsten oder Kleinportionen abgefüllt (geformt) und vorzugsweise nach der Abfüllung gekühlt und ggf. zur Geschmacksbeeinflussung geräuchert wird. Insbesondere dann, wenn die heiße Käsemasse nach Schritt b), bevorzugt inline, zunächst zu einer Bandform geformt wird, bevorzugt um aus der bandförmigen, dann gekühlten Käsemasse Scheiben zu schneiden, kann es vorteilhaft sein, u.a. zur Reduktion einer Verklebeneigung vor und/oder während des Schrittes b) eine Stärkquelle zuzusetzen, insbesondere mit einem Gewichtsanteil bezogen auf die fertige Käsemasse aus einem Wertebereich zwischen 0,5 Gew.-% und 5 Gew.-%, vorzugsweise zwischen 1 Gew.-% und 3 Gew.-%. Bevorzugt wird als Polysaccharidquelle native und/oder modifizierte Stärke eingesetzt. Alternativ zur Herstellung von Scheiben aus dem, insbesondere kontinuierlich erstellten Käseband ist es möglich, aus dem Käseband Stifte und/oder Würfel od.dgl. geometrische Formen zu formen und dann bevorzugt unmittelbar, d.h. ohne Zwischenlagerung abzupacken, insbesondere unter Inertgasatmosphäre.

Zur Einstellung des Bräunungsgrades, insbesondere vor dem Hintergrund einer temperaturbedingten Maillard-Reaktion, ist es vorteilhaft dem Käseausgangsmaterial vor und/oder während des Schrittes b) eine Laktosequelle, vorzugsweise Milchpulver und/oder Molkenpulver zuzusetzen, insbesondere mit einem Gewichtsanteil bezogen auf die fertige Käsemasse zwischen 0,5 Gew.-% und 5 Gew.-%, ganz besonders bevorzugt zwischen 1 Gew.-% und 3 Gew.-%. Es ist auch möglich, auf eine Laktosequelle zu verzichten.

Insbesondere die Herstellung von Scheiben ist sehr interessant im Hinblick auf die mittels des erfindungsgemäßen Verfahrens erreichbaren Produkteigenschaften, da die Fasern parallel zueinander ausgerichtet in der Scheibenebene liegen und sich bevorzugt parallel zu zwei Außenkanten einer rechteckigen Scheibe erstrecken. Hierdurch kann die Scheibe vom Benutzer von Hand einfach in kleinere, bevorzugt rechteckige Flächenabschnitte unterteilt werden. Der Faserverlauf bildet dabei eine Art von Sollreißlinien.

Zur Fettgehaltseinstellung kann es vorteilhaft sein, dem Käseausgangsmaterial vor und/oder während des Schrittes b) eine Fettquelle, insbesondere Butter und/oder Pflanzenfett zuzusetzen, insbesondere mit einem Gewichtsanteil bezogen auf die Käsemasse zwischen 0 Gew.-% und 10 Gew.-%, ganz besondere bevorzugt zwischen 0 Gew.-% und 5 Gew.-%.

Insgesamt wird durch das erfindungsgemäße Verfahren ein Käseprodukt erhalten, das sich durch eine Kombination der positiven Eigenschaften der Schmelzkäseherstellung mit den positiven Schmelz-, Mundgefühl- und Geschmacksvarianzeigenschaften von Naturkäse auszeichnet, wenn erfindungsgemäß auf die Zugabe von Schmelzsalzen vollständig verzichtet wird.

Im Gegensatz zu bekannten Verfahren erfolgt im Falle des Einsatzes eines bakteriell gereiften Käses und/oder eines Pasta-Filata-Käses die Zugabe in Stückform, d.h. nicht in Pulverform, vor oder während des Schrittes b), so dass vergleichsweise hohe Gew.-%-Anteile dieser Käseausgangsmaterialbestandteile vorgesehen werden können, mit dem Ergebnis einer positiven Eigenschaftenbeeinflussung, insbesondere hinsichtlich möglicher Geschmacks-, Hitzestabilitäts- und/oder Schmelzeigenschaften.

Das erfindungsgemäße Verfahren ermöglicht zudem die weitere Verarbeitung der heißen Käsemasse, wie dies von Schmelzkäse bekannt ist, ohne die Notwendigkeit Schmelzsalze einzusetzen, wobei erfindungsgemäß ausdrücklich auf Schmelzsalze in dem erfindungsgemäßen Prozess vollständig verzichtet wird.

Wie erwähnt ist es besonders bevorzugt, das Abkühlen und Formen unmittelbar auf den Schritt b) folgen zu lassen, indem die noch heiße Käsemasse unmittelbar einer entsprechenden Anlage bzw. Vorrichtung, d.h., bevorzugt kombinierten Form- und Kühlmitteln, zugeführt wird. Ganz besonders bevorzugt erfolgt die weitere Verarbeitung zu Scheiben mittels einer Kühlbandvorrichtung, wie diese beispielsweise in der WO 2005/000012 A1 beschrieben ist, wobei die Kühlbandvorrichtung bevorzugt mit Formmitteln versehen oder solche dieser nachgeordnet sind, um das zu verpackende Endprodukt zu formen. Mit einer derartigen Vorrichtung kann die Bandform auch zu Stiften oder Würfeln verarbeitet und das jeweilige Endprodukt (Scheiben, Stifte oder Würfel) unmittelbar einer Verpackung, noch weiter bevorzugt unter Inertgasatmosphäre zugeführt werden. Selbstverständlich ist es denkbar, dass eine Verpackungsmaschine nicht unmittelbar an eine Kühlbandvorrichtung bzw. daran anschließende Formmittel anschließt, was jedoch bevorzugt ist; denkbar ist es auch, die aus der Kühlbandvorrichtung (oder anders aufgebauten, bevorzugt kombinierten Kühl- und Formmitteln) resultierenden Produkte (Scheiben, Stifte oder Würfel) zunächst zu sammeln und dann zu einer Verpackungsmaschine batchweise zu überführen - wesentlich ist jedoch, dass keine langfristige Zwischenlagerung erfolgt, insbesondere nicht in einer Salzlake oder dgl. Flüssigkeit.

Im Hinblick auf die Zusammensetzung des Käseausgangsmaterials gibt es unterschiedliche Möglichkeiten. Grundsätzlich ist es möglich, lediglich eine Art von Ausgangsmaterial, beispielsweise nur bakteriell gereiften Käse oder nur Pasta-Filata-Käse einzusetzen. Besonders bevorzugt ist jedoch eine Mischung aus zumindest zwei unterschiedlichen Käseausgangsmaterialien, insbesondere eine Mischung aus einem bakteriell gereiften Käse und Pasta-Filata-Käse, wobei zusätzlich Käsebruch, insbesondere in geringer Menge hinzugegeben werden kann. Denkbar und bevorzugt ist es jedoch eine Mischung aus bakteriell gereiftem Käse und Pasta-Filata-Käse ohne Käsebruch als Käseausgangsmaterial einzusetzen. Möglich und bevorzugt ist es auch das Käseausgangsmaterial ausschließlich aus bakteriell gereiftem Käse zusammenzustellen, wobei es dann bevorzugt ist, mindestens zwei unterschiedliche Sorten, wie Gouda-, Maasdamer-, Parmesan-, Cheddar- oder Edamer-Käse einzusetzen und/oder mindestens zwei bakteriell gereifte Käse unterschiedlicher Reifegrade, beispielsweise jungen Käse und mittelgereiften Käse oder mittelgereiften Käse und stark gereiften oder stark gereiften Käse und jungen Käse, oder jungen Käse, mittelgereiften Käse und stark gereiften Käse. Auch ist es möglich nur Pasta-Filata-Käse einzusetzen, wobei in diesem Fall bevorzugt unterschiedliche Pasta-Filata-Reifegrade und/oder unterschiedliche Pasta-Filata-Käsesorten (bakteriell gereift und/oder ungereift) eingesetzt werden können, beispielsweise Mozzarella-Käse und/oder Provolone-Käse und/oder Cascaval-Käse.

Auch für den Fall einer Mischung aus bakteriell gereiftem Käse und Pasta-Filata-Käse ist es bevorzugt von dem bakteriell gereiften Käse und/oder dem Pasta-Filata-Käse unterschiedliche Sorten und/oder Reifegrade einzusetzen.

Für den Fall des Vorsehens von bakteriell gereiftem Käse kann beispielsweise Gouda-Käse und/oder Maasdamer-Käse und/oder Parmesan-Käse und/oder Cheddar-Käse und/oder Edamer-Käse eingesetzt werden, wobei es möglich ist nur jungen Käse, nur mittelgereiften Käse oder nur stark gereiften Käse einzusetzen. Bevorzugt ist eine Mischung bakteriell gereifter Käse unterschiedlicher Reifegrade. Für den Fall des Einsatzes von Pasta-Filata-Käse (bakteriell gereift oder ungereift) ist es beispielsweise möglich Mozzarella-Käse und/oder Provolone-Käse und/oder Cascaval- Käse einzusetzen.

In der Käsemischung können die unterschiedlichen Käsearten anteilsmäßig wie folgt eingesetzt werden: Käsebruch zwischen 0 Gew.-% und Gew.-40%, Pasta Filata - Käse (ungereift oder gereift oder bevorzugt Mischungen davon) zwischen 0 Gew.-% und 100 Gew.-%, bakteriell mild gereifter Käse (oder bevorzugt Mischungen von unterschiedlichen Käsen) zwischen 25 Gew.-% und 100 Gew.-%, bakteriell mittel bis stark gereifte Käse (oder bevorzugt Mischungen unterschiedlicher Käsesorten und/oder unterschiedlich mittel bis stark gereifter Käse) 15 Gew.-% bis 90 Gew.-%.

So wird Käseausgangsmaterial (Käsemischung) - abhängig vom gewünschten milden oder würzigen Käsegeschmacksprofil des Endproduktes - bevorzugt mindestens 10 Gew.-% Käsebruch oder Pasta-Filata- Käse und bevorzugt mindestens 25 Gew.-% bakteriell gereifter Käse oder bakteriell gereifter Pasta-Filata- Käse verwendet.

Das erfindungsgemäße Verfahren ermöglicht, wie erwähnt, das Käseausgangsmaterial in Stücken beizugeben, insbesondere das Käseausgangsmaterial, wie bakteriell gereiften Käse oder Pasta-Filata-Käse. Dabei haben die Stücke vor Zugabe zum Schritt b) zumindest teilweise bevorzugt einen Mindestdurchmesser von 3 mm, besonders bevorzugt von 5 - 50 mm.

Ganz besonders bevorzugt wird zur Durchführung des Schrittes b) ein Wellenkocher (wird auch als Doppelschneckenkocher - engl.: double screw cooker - bezeichnet) eingesetzt, umfassend mindestens zwei, zumindest näherungsweise parallele und vorzugsweise in eine gemeinsame und/oder entgegengesetzte Richtung antreibbare Wellen (Schnecken) zum Kneten und Ziehen (Stretchen) der Zutaten. Besonders bevorzugt erfolgt das Erhitzen, unabhängig von der Wahl der konkreten Vorrichtung, durch Direktdampfzugabe, was zu einer Kondensatanreicherung führt. Bevorzugt beträgt der Gesamtgewichtsanteil an Kondensat bezogen auf die Käsemasse zwischen 5 Gew.-% und 20 Gew.-%, bevorzugt zwischen 6 Gew.-% und 12 Gew.-%. Besonders bevorzugt wird zusätzlich zu einer Kondensatanreicherung Wasser zudosiert, entweder in einer einzigen Gabe oder, was bevorzugt ist in mehreren Gaben, ganz besonders bevorzugt in ausschließlich zwei zeitlich zueinander versetzten Gaben. Bevorzugt beträgt die Menge an Wasserzugabe (zusätzlich zu einer ggf. vorgesehenen Kondensatmenge) zwischen 2 Gew.-% und 18 Gew.-% bezogen auf die Käsemasse, ganz besonders bevorzugt zwischen 4 Gew.-% und 12 Gew.-%. Im Hinblick auf den Ablauf des Schrittes b) ist es bevorzugt zunächst bei einer geringeren Temperatur zu mischen, insbesondere das Käseausgangsmaterial und die weiteren Zugaben gemäß Schritt c) bei einer ersten Temperatur, beispielsweise zwischen 60°C und 65°C. Bevorzugt erfolgt während des Vormischens die Zugabe einer ersten Wassergabe und nach dem Vormischen bevorzugt bei einer Temperatur zwischen 60°C und 88°C, insbesondere zwischen 62°C und 85°C die Zugabe einer zweiten Wasserzugabe, wobei auch hier das weitere Erhitzen bevorzugt durch Direktdampfzugabe, ganz besonders bevorzugt in einem Wellenkocher erfolgt. Vor und/oder während des Schrittes b) können bevorzugt auch weitere Zutaten, wie Kräuter, Gewürze oder andere Lebensmittel, beispielsweise Fleischwaren wie Schinken und/oder Gemüse zugegeben werden.

Als besondere vorteilhaft hat es sich herausgestellt eine maximale Drehzahl bei der Durchführung des Schrittes b) zum Stretchen mittels eines Wellenkochers (Doppelschneckenkocher) nicht zu überschreiten, damit die faserige Textur, das Schmelzverhalten und das natürliche Mundgefühl erhalten bleibt. Als bevorzugt hat sich eine maximale Wellendrehzahl von 200 U/min herausgestellt, ganz besonders bevorzugt eine maximale Wellendrehzahl von 150 U/min.

Auch im Hinblick auf die Wahl des, insbesondere durch Dampfdirektbeheizung einzustellenden Temperaturbereichs bei Schritt b) gibt es unterschiedliche Möglichkeiten. Insgesamt ist es vorteilhaft, wenn eine Temperatur aus einem Temperaturbereich zwischen 60°C und 88°C eingestellt wird. Der Temperaturbereich kann insbesondere in Abhängigkeit der Menge und der Art der Zugabe der Proteinquelle und/oder der Stärkequelle eingestellt werden, wobei grundsätzlich die Temperatur mit zunehmender Stärkemenge und/oder Proteinmenge zunehmen kann. Insbesondere für eine stärkefreie Verfahrensweise haben sich Temperaturen im Bereich zwischen 62°C und 65°C oder ggf. noch zwischen 66°C und 69°C herausgestellt. Für den Fall der Verarbeitung der heißen Käsemasse auf einer sogenannten Kühlbandvorrichtung ist es vorteilhaft die Käsemasse auf Temperaturen zwischen 70°C und 79°C oder zwischen 80°C und 85°C zu erhitzen.

Durch die erfindungswesentliche fasrige Textur zeichnet sich das aus dem erfindungsgemäßen Verfahren resultierende, fasrige Käseprodukt durch eine im Vergleich zu üblichen Schmelzkäsen mit homogener Struktur hohe Dehnfähigkeit aus, die mit der Dehnfähigkeit von klassischem Pasta-Filata-Käse oder auch bakteriell gereiftem Käse vergleichbar ist.

Besonders bevorzugt beträgt die Dehnfähigkeit, gemessen nach der Methode von REPARET und NOEL (2003) bzw. dem unten stehend erläuterten Verfahren mehr als 3N, ganz besonders bevorzugt mehr als 3,3N. Besonders bevorzugt ist es, wenn die Dehnfähigkeit in einem Wertebereich zwischen 3,1N und 4,8N, ganz besonders bevorzugt zwischen 3,4N und 4,5N beträgt.

Aus der im folgenden eingeblendeten Tabelle wird ersichtlich, dass die nach dem Konzept der Erfindung hergestellten Käseprodukte E-G die beschriebene, hohe Dehnfähigkeit, gemessen in N aufweisen. Diese Dehnfähigkeit ist deutlich höher als bei klassischen, unter Einsatz von Schmelzsalzen hergestellten Schmelzkäsescheiben (Probe C) oder als alter Gouda (Probe B). Die Dehnfähigkeit der nach der Erfindung hergestellten Käseprodukte (Proben E-G) liegt im Bereich von klassischem Pasta-Filata-Käse (Probe D).

**Tabelle Dehnfähigkeitstest**

| **Produkt** | | **Dehnfähigkeit Max. Kraft (N)** |
|---|---|---|
| Gouda jung | A | 5,2 |
| Gouda altgereift | B | 2,5 |
| SOS-Gouda | C | 2,3 |
| Pizzakäse Mozzarella | D | 3,7 |
| V02/M1 SOS Pasta-filata | E | 3,7 |
| V03/M1 SOS Gouda | F | 3,8 |
| V04/M2 SOS Parmesan | G | 4,1 |

| | | |
|---|---|---|
| A: junger bakteriell gereifter Gouda Naturkäse B: älterer bakteriell gereifter Gouda Naturkäse C: klassischer Schmelzkäse mit Schmelzsalzen E - G: Käseprodukte hergestellt gemäß der Erfindung | | |

Die Probe E enthält als Käseausgangsmaterial ausschließlich bakteriell gereiften Pasta-Filata-Käse bezogen auf die Gesamtmasse des Käseproduktes beträgt der Gewichtsanteil des Käseausgangsmaterials über 90%. Bei der Probe F wurde unter ansonsten gleichen Bedingungen Gouda eingesetzt. Bei der Probe G Parmesankäse.

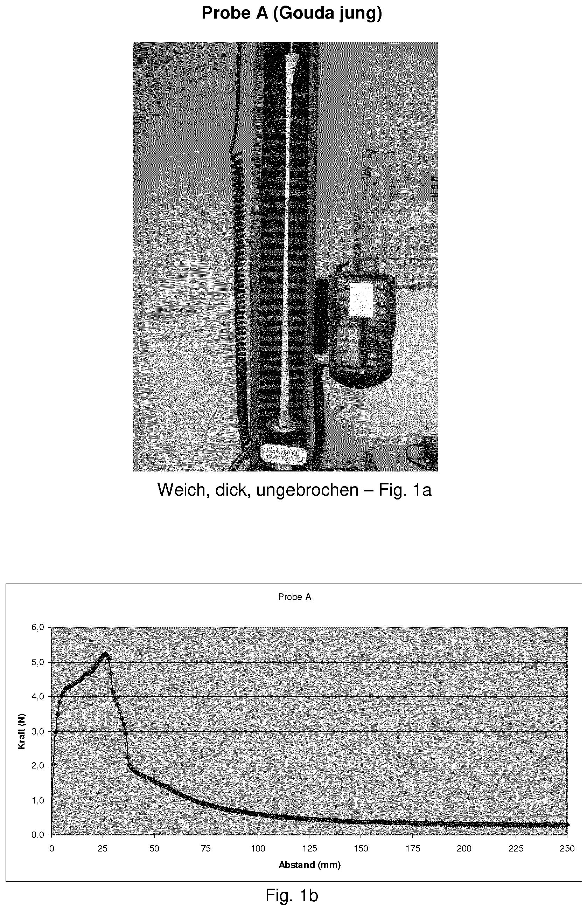

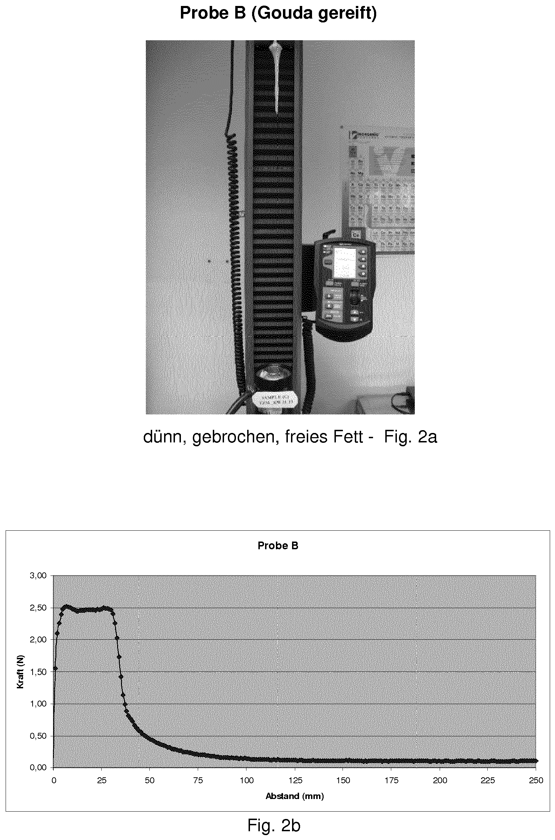

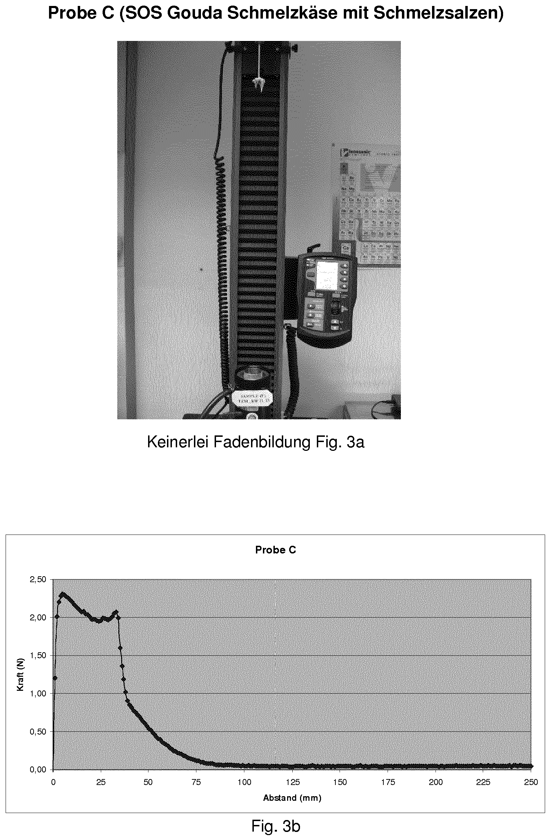

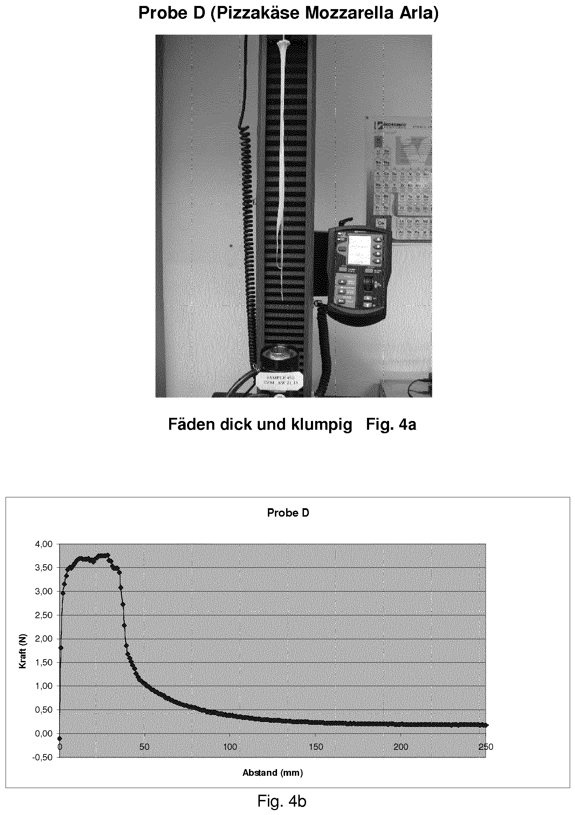

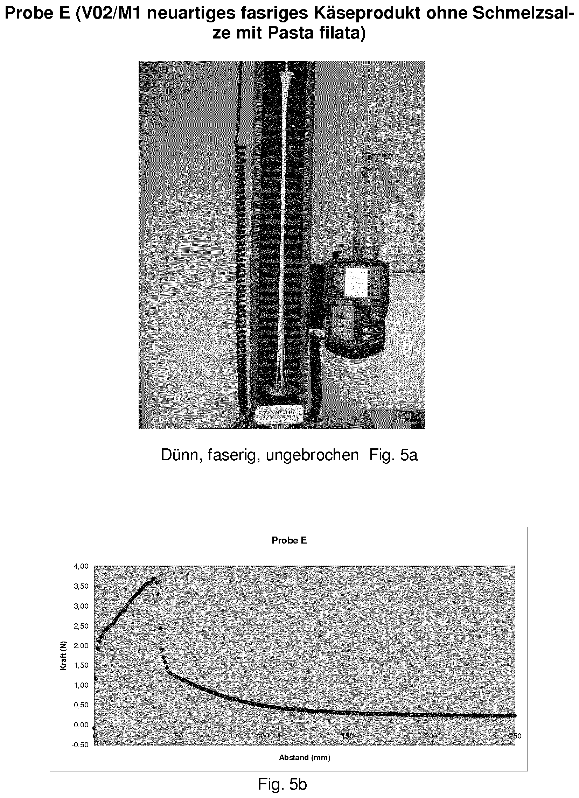

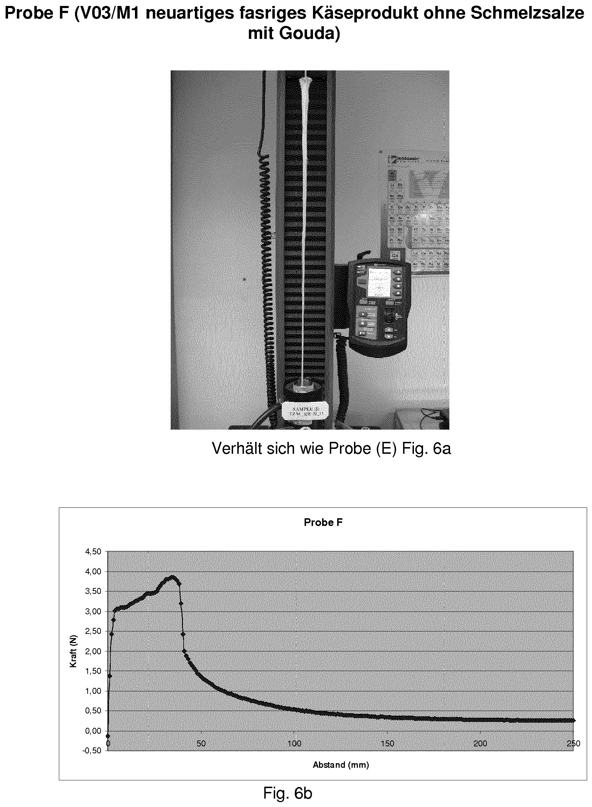

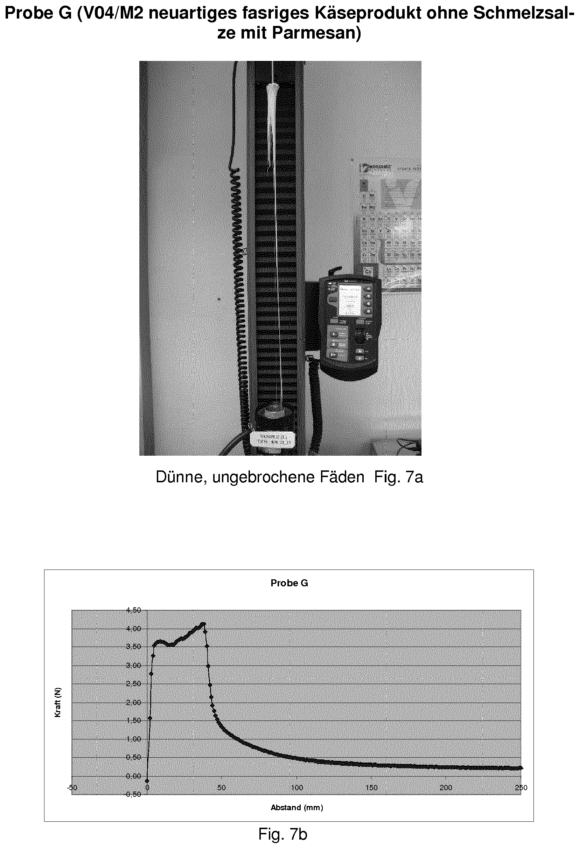

Die einzelnen bebilderten Ergebnisse sind in den folgenden Figuren 1a-7b dargestellt.
Fig 1a, b:Dehnfähigkeitstest im Bild und zugehöriges Diagramm Probe A
Fig. 2a, b:Dehnfähigkeitstest im Bild und zugehöriges Diagramm Probe B
Fig. 3a, b: Dehnfähigkeitstest im Bild und zugehöriges Diagramm Probe C
Fig. 4 a, b: Dehnfähigkeitstest im Bild und zugehöriges Diagramm Probe D
Fig. 5 a, b: Dehnfähigkeitstest im Bild und zugehöriges Diagramm Probe E
Fig. 6 a, b: Dehnfähigkeitstest im Bild und zugehöriges Diagramm Probe F
Fig. 7a, b: Dehnfähigkeitstest im Bild und zugehöriges Diagramm Probe G

### Dehnfähigkeitstest

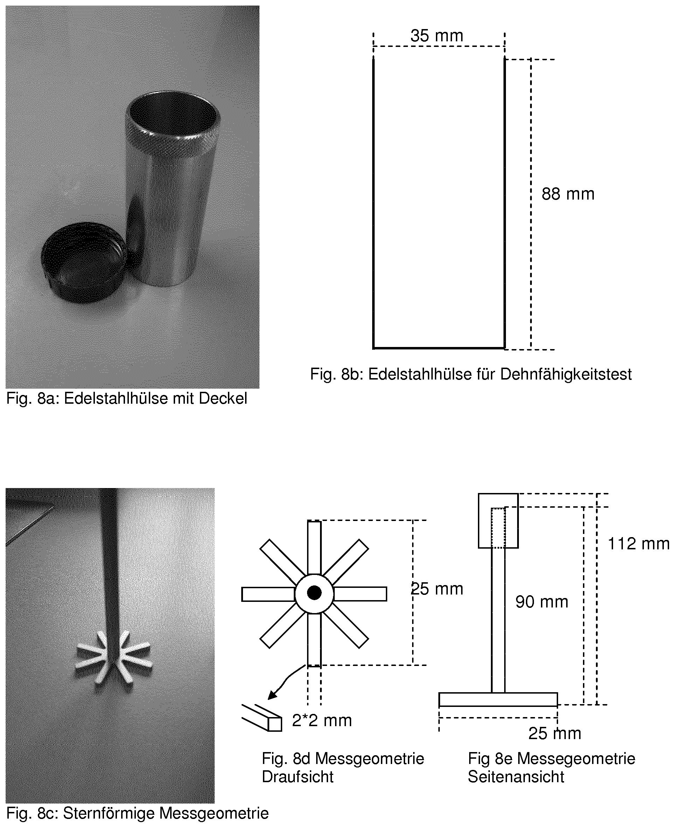

Die Dehnfähigkeit wurde nach der Methode von REPARET und NOEL (2003) durchgeführt. Konkret wurde wie folgt vorgegangen: 50 g geriebener Käse wurde in Edelstahlhülsen (Fig. 8 a, b) gefüllt, mit einem Plastikdeckel verschlossen und bei 4 °C im Kühlschrank gelagert, d.h. auf 4°C temperiert. Die gefüllte Edelstahlhülse wurde zur Vorbereitung für die Messung in ein 60 °C heißes Wasserbad (Lauda Ecoline Typ RE212, Lauda Dr. R. Wobser GmbH & Co. KG, Lauda - Königshofen, Deutschland) gestellt. Nach 15 min wurde der geschmolzene Käse am Rand heruntergeschabt und für weitere 5 min bei 60 °C geschmolzen. Nach insgesamt 20 min wurde die Edelstahlhülse in das auf ebenfalls 60 °C (mittels Peltier-Element) geheizte Rheometer (Physica Typ MCR301, Anton Paar, Ostfildern, Deutschland) überführt und fixiert. Ein achtarmiger Stahlkörper (Fig. 8c - e) drang in die Probe ein (Abstand zum Boden 12 mm). Nach einer Drehung um 22,5 ° wurde eine Wartezeit von 30 s eingehalten und anschließend die Traverse des Rheometers mit einer Geschwindigkeit von 8,333 mm/s durch die Käsemasse nach oben bewegt. Die dabei benötigte Kraft wurde aufgezeichnet. Es wurde mindestens eine Dreifachbestimmung durchgeführt.

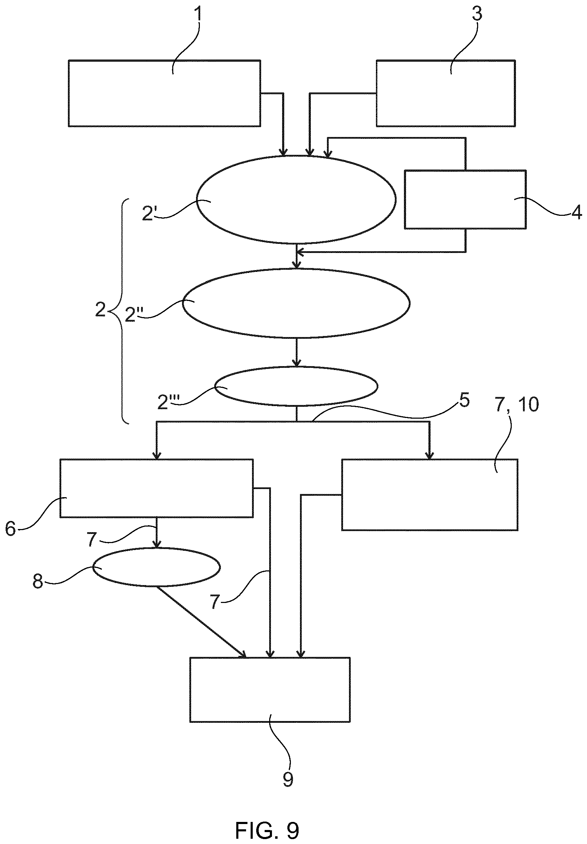

Weitere Vorteile, Merkmale und Einzelheiten der Erfindung ergeben sich aus der Beschreibung bevorzugter Ausführungsbeispiele sowie anhand der Fig. 9.

In Fig. 9 sind bevorzugte Verfahrensabläufe in einem Ablaufdiagramm dargestellt.

Zunächst wird bei 1 Käseausgangsmaterial bereitgestellt. Bevorzugt handelt es sich hierbei um eine Mischung aus unterschiedlichen Käseausgangsmaterialien, beispielsweise von bakteriell gereiftem Käse und Pasta-Filata-Käse, wobei es auch denkbar ist ein sortenreines Käseausgangsmaterial bereitzustellen. Besonders bevorzugt umfasst die Mischung oder besteht aus mindestens zwei unterschiedlichen Käsesorten von bakteriell gereiftem Käse und/oder Pasta-Filata-Käse. Zusätzlich oder alternativ können mindestens zwei unterschiedliche bakteriell gereifte Käse mit unterschiedlichem Reifegrad eingesetzt werden. Dem Käseausgangsmaterial kann bei Bedarf Butter und/oder Pflanzenfett zugesetzt werden. Das Käseausgangsmaterial wird in entsprechende Erhitzungs-, und Knet- und Stretchmittel 2, bevorzugt einen Wellenkocher gegeben, indem Verfahrensschritt b) gemäß Anspruch 1, bevorzugt batchweise, ausgeführt wird. In die Mittel 2 wird bevorzugt auch eine Pulvermischung 3 zudosiert. Diese umfasst eine Proteinquelle, insbesondere Molkenprotein und/oder Milchprotein. Sie kann bei Bedarf eine Polysaccharidquelle, insbesondere eine Stärkequelle, bevorzugt native und/oder modifizierte Stärke; und/oder eine Laktosequelle, insbesondere Milchpulver und/oder Molkenpulver enthalten. Zudem werden den Mitteln 2 ggf. weitere Zutaten, wie Kräuter, Gewürze oder Nicht-Käselebensmittel (d.h. andere Lebensmittel), z.B. Schinken, Gemüse, etc. zugeführt.

Bevorzugt läuft das Batchverfahren in den Mitteln 2, insbesondere dem Wellenkocher zeitlich gestuft ab, wobei in einem ersten Teilschritt 2' ein Vormischen des Käseausgangsmaterials und der Pulvermischung 3 und der Zutaten 4 erfolgt. Weiter bevorzugt erfolgt bei dem Teilschritt 2' eine erste Zudosierung von Wasser (erste Wassergabe) und die Mischung wird gleichzeitig, bevorzugt mit Direktdampf erhitzt, ganz besonders bevorzugt auf eine Temperatur aus einem Temperaturbereich zwischen 60°C und 65°C.

In einem danach folgenden Teilschritt 2" wird innerhalb der Mittel 2, insbesondere innerhalb des Wellenkochers, bevorzugt eine weitere Gabe Wasser zudosiert und weiter erhitzt mit Direktdampf auf die gewünschte Endtemperatur aus einem Temperaturbereich zwischen 60°C und 88°C. In einem Verfahrensteilschritt 2''' erfolgt eine mechanische Bearbeitung durch Kneten und Stretchen (Ziehen), wobei der Verfahrensteilschritt 2" kein separater Verfahrensteilschritt sein muss, sondern auch bereits während des Verfahrensteilschrittes 2' und/oder des Verfahrensteilschrittes 2" durchgeführt werden kann. In dem gezeigten Ausführungsbeispiel ist zu erkennen, dass die Zutaten 4 zumindest teilweise oder vollständig auch nach dem Teilschritt 2' zudosiert werden können. Ebenso ist es denkbar, jedoch nicht gezeigt, dass die Pulvermischung 3, zumindest teilweise auch bei den Verfahrensteilschritten 2' und 2''' zugegeben werden können.

Die Wassergabe muss nicht auf zweimal erfolgen, es ist auch möglich die gesamte Wassermenge auf einmal zuzugeben, wobei eine zweifache Gabe eine angepasstere Dosierung durch die Nachdosierung im zweiten oder einem danach folgenden Wassergabeschritt ermöglicht.

Jedenfalls resultiert nach Beendigung der mechanischen Bearbeitung aus Schritt b) eine faserige heiße Käsemasse 5, die dann auf unterschiedliche Weise noch im heißen Zustand weiter bearbeitet werden kann. In der Zeichnungshälfte links ist eine mögliche Vorgehensweise dargestellt, wobei in einem Schritt 6 die heiße Käsemasse abgefüllt wird, beispielsweise zu Blöcken oder in Würste und/oder Kleinportionen und danach in einem Kühlschritt 7, insbesondere ausschließlich in Gasatmosphäre, z.B. mit gekühlter Luft gekühlt wird. Ein unmittelbarer Wasserkontakt mit der heißen Käsemasse sollte vermieden werden. Ggf. kann auf den Kühlschritt 7 ein fakultativer Räucherschritt 8 folgen und sodann erfolgt die Verpackung 9 in einer Endverpackung, insbesondere in Inertgasatmosphäre. Alternativ kann auf den Räucherschritt 8 verzichtet werden und nach dem Kühlen 7 unmittelbar verpackt werden.

Vorstehend beschriebenes Verfahren kommt vollständig ohne den Zusatz von Schmelzsalzen sowie ohne den Zusatz von Starterkulturen aus. Die beschriebene Abkühlung der Käsemasse erfolgt unmittelbar auf Schritt c) - jedenfalls wird keine Reifephase bei Temperaturen über 10°C durchgeführt bzw. eingehalten, was aufgrund des Verzichtes auf Starterkulturen auch keinen Sinn machen würde.

Eine alternative Vorgehensweise ist in der Zeichnung rechts dargestellt. Dort erfolgt die Weiterverarbeitung der noch heißen Käsemasse insbesondere in der Art von Schmelzkäse, in dem die heiße Käsemasse zu einem, insbesondere kontinuierlichen Käseband, ausgeformt wird, welches dann zu Scheibenstiften oder Würfel geformt wird, wobei vorgenannte Verfahrensschritte inkl. des Kühlschrittes bevorzugt auf einer Kühlbandvorrichtung 10 mit nachgeordneter oder integrierter Scheibenform-, Stifte- oder Würfelformeinrichtung durchgeführt werden, an die bevorzugt unmittelbar der Verpackungsschritt 9 anschließt. Keine der Vorgehensweisen beinhaltet eine direkte Kühlung und/oder Lagerung in Wasser, insbesondere Salzwasser.

Im Folgenden sind beispielhaft zwei Rezepturbeispiele angegeben.

### Rezept 1 (mit Stärke und beispielhaft einfacher Wasserzugabe und Butterdosierung)

Butter (Fettquelle zur Fettgehaltseinstellung) 7 Gew.-%
Chester-Käse jung 20 Gew.-% (entspricht 30 Gew.-% des Käseausgangsmaterials)
Chester-Käse mittelreif 20 Gew.-% (entspricht 30 Gew.-% des Käseausgangsmaterials)
Bergkäse gereift 25 Gew.-% (entspricht 40 Gew.-% des Käseausgangsmaterials)
Magermilchpulver (Laktosequelle) 4 Gew.-%
Milchproteinkonzentrat (Proteinquelle) 3 Gew.-%
Stärke (Polysaccharidquelle) 2 Gew.-%
Speisesalz 1 Gew.-%
Wasser (einfache Gabe) 10 Gew.-%
Kondensat 8 Gew.-%

### Rezept 2 (stärkefreies Rezept mit beispielhafter zweifacher Wasserzugabe und Butterdosierung)

Butter (Fettquelle zur Fettgehaltseinstellung) 3% Gew.-%
Mozzarella 50 Gew.-% (entspricht 62,5 Gew.-% des
Käseausgangsmaterials)
Edamer oder Cascaval 30 Gew.-% (entspricht 37,5 Gew.-% des Käseausgangsmaterials)
Milchproteinkonzentrat (Proteinquelle) 3 Gew.-%
Magermilchpulver (Laktosequelle) 2 Gew.-%
Speisesalz 1 Gew.-%
Wasser (erste Gabe) 2 Gew.-%
Wasser (zweite Gabe) 3 Gew.-%
Kondensat 6 Gew.-%

Die Rezepturen sind selbstverständlich rein beispielhaft zu verstehen, wobei Variationen innerhalb des Schutzumfangs der Ansprüche möglich. Insbesondere kann die Art und Menge des Käseausgangsmaterials bzw. die Käseausgangsmaterialmischung variieren sowie beispielsweise die Menge an Polysaccharid-, Laktose- und Proteinquelle.

### Bezugszeichenliste

- 1: Käseausgangsmaterial
- 2: Mittel zur Ausführung des Schrittes b)
- 2': erster Verfahrensteilschritt
- 2": Verfahrensteilschritt
- 2''': Verfahrensteilschritt
- 3: Pulvermischung
- 4: Zutaten
- 5: Käsemasse
- 6: Schritt
- 7: Kühlschritt
- 8: Räucherschritt
- 9: Verpackung
- 10: Kühlbandvorrichtung

## Patentansprüche

1. Verfahren zum .Herstellen eines faserigen Käseproduktes, insbesondere für den Heißverzehr, mit den Schritten:
a) Bereitstellen eines Käseausgangsmaterials (1) mit einem Mindestgewichtsanteil an bakteriell gereiftem Käse und/oder an Pasta-Filata Käse von 50 Gew.-%;
b) Erhitzen, Kneten und Stretchen des Käsematerials und Erhalten einer Käsemasse;
c) Formen der heißen Käsemasse;
d) Abkühlen der Käsemasse, wobei das Abkühlen der heißen Käsemasse nicht in Kontakt zu Salzwasser, bevorzugt wasserkontaktfrei sowie keine Lagerung der gekühlten Käsemasse in Kontakt zur Salzwasser, insbesondere wasserkontaktfrei, erfolgt;
**dadurch gekennzeichnet,**
**dass** vor und/oder während der Durchführung des Schrittes b) Molkenprotein und/oder Milcheiweiß als Proteinquelle in Pulverform zugegeben wird, wobei der Gewichtsanteil der Proteinquelle, bezogen auf die Käsemasse, zwischen 0,5 Gew.-% und 7 Gew.-% beträgt, und dass Schritt b) durchgeführt wird, bis die erhaltene Käsemasse eine faserige Textur aufweist, und dass vor, während oder nach Schritt b) keine Schmelzsalze zugegeben werden, und dass das Käseausgangsmaterial (1) einen Gewichtsanteil an Käsebruch von weniger als 20 Gew.-% aufweist, insbesondere von 0 Gew.-% (käsebruchfrei).

2. Verfahren nach Anspruch 1,
**dadurch gekennzeichnet,**
**dass** das Molkenprotein/Kasein-Gewichtsverhältnis der Käsemasse auf einen Wert kleiner oder gleich 1:20 eingestellt wird, bevorzugt auf einen Wert kleiner oder gleich 1:30 und/oder dass das Molkenprotein/Kasein-Gewichtsverhältnis der Käsemasse eingestellt wird aus einen Verhältniswert aus einem Wertebereich zwischen 1:20 bis 1:80, insbesondere zwischen 1:30 und 1:80, noch weiter bevorzugt zwischen 1:40 und 1:80.

3. Verfahren nach einem der Ansprüche 1 oder 2,
**dadurch gekennzeichnet,**
**dass** der Gewichtsanteil der Proteinquelle bezogen auf die Käsemasse zwischen 1 Gew.-% und 5 Gew.-% beträgt.

4. Verfahren nach einem der Ansprüche 1 bis 3,
**dadurch gekennzeichnet,**
**dass** vor und/oder während der Durchführung des Schrittes b) eine Polysaccharid- Quelle, insbesondere eine Stärkequelle, und/oder eine Laktosequelle, insbesondere Milchpulver und/oder Molkenpulver zugegeben wird.

5. Verfahren nach einem der vorhergehenden Ansprüche,
**dadurch gekennzeichnet,**
**dass** vor, während und nach Schritt b) kein Säureregulator zugegeben wird.

6. Verfahren nach einem der vorhergehenden Ansprüche, **dadurch gekennzeichnet, dass**
während der Schritte a) bis d) keine Starterkulturen, auch nicht in Form von Sporen, zugegeben werden und/oder dass die Käsemasse in weniger als 24 h, vorzugsweise weniger als 12 h, weiter bevorzugt weniger als 6 h, noch weiter bevorzugt in weniger als 2 h, noch weiter bevorzugt in weniger als 1 h, ganz besonders bevorzugt unmittelbar nach Schritt c) auf eine Temperatur von weniger als 10°C, bevorzugt auf eine Temperatur von weniger als 8° C, noch weiter bevorzugt auf eine Temperatur zwischen 1°C und 7°C, ganz besonders bevorzugt auf eine Temperatur zwischen 4°C und 6°C abgekühlt wird.

7. Verfahren nach einem der vorhergehenden Ansprüche,
**dadurch gekennzeichnet,**
**dass** das Abkühlen und Formen, bevorzugt zur Scheiben-, Würfel- oder Stiftformung auf den Schritt b) folgt und dass, bevorzugt unmittelbar, an den Form- und Kühlschritt, ohne Zwischenlagerung von mehr als einem Tag, ganz besonders bevorzugt ohne jegliche Zwischenlagerung, bevorzugt inline, das Verpacken des Käseproduktes erfolgt.

8. Verfahren nach einem der vorhergehenden Ansprüche,
**dadurch gekennzeichnet,**
**dass** der Schritt b) batchweise durchgeführt wird und/oder dass nach Schritt b) das Formen und Abkühlen, bevorzugt auch das Verpacken, inline durchgeführt wird, insbesondere in dem die heiße Käsemasse nach Schritt b) entsprechenden Kühl-, Form- und ggf. Verpackungsmitteln zugeführt wird.

9. Verfahren nach einem der vorhergehenden Ansprüche,
**dadurch gekennzeichnet,**
**dass** das Käseausgangsmaterial eine Mischung aus mindestens zwei Zutaten (Käsen) der folgenden Gruppe von Zutaten umfasst oder daraus besteht: bakteriell gereifter Käse, ungereifter Pasta-Filata-Käse, bakteriell gereifter Pasta-Filata-Käse; und/oder dass das Käseausgangsmaterial eine Mischung aus mindestens zwei unterschiedlichen Sorten von bakteriell gereiften Käsen umfasst oder daraus besteht; und/oder dass das Käseausgangsmaterial eine Mischung aus mindestens zwei unterschiedlichen Sorten von Pasta-Filata-Käsen umfasst oder daraus besteht; und/oder dass das Käseausgangsmaterial eine Mischung aus mindestens zwei hinsichtlich ihres Reifegrades unterschiedlichen bakteriell gereiften Käsen umfasst oder daraus besteht und/oder dass das Käseausgangsmaterial eine Mischung aus zumindest zwei hinsichtlich ihres Reifegrades unterschiedlichen Pasta-Filata-Käsen umfasst oder daraus besteht.

10. Verfahren nach einem der vorhergehenden Ansprüche,
**dadurch gekennzeichnet,**
**dass** das Käseausgangsmaterials (1) einen Gewichtsanteil an Käsebruch von weniger als 10 Gew.-%, bevorzugt von weniger als 5 Gew.-% aufweist.

11. Verfahren nach einem der vorhergehenden Ansprüche,
**dadurch gekennzeichnet,**
**dass** der Gewichtsanteil des Käseausgangsmaterials (1) an der Käsemasse mindestens 50 Gew.-%, bevorzugt mindestens 65 Gew.-%, ganz besonders bevorzugt zwischen 65 Gew-% und 80 Gew-% oder mehr beträgt und/oder dass der Gewichtsanteil an bakteriell gereiftem Käse und/oder an Pasta-Filata-Käse an dem Käseausgangsmaterial mindestens 60 Gew.-%, bevorzugt mindestens 70 Gew.-%, weiter bevorzugt mindestens 80 Gew.-%, ganz besonders bevorzugt mindestens 90 Gew.-%, noch weiter bevorzugt 100 Gew.-% beträgt.

12. Verfahren nach einem der vorhergehenden Ansprüche,
**dadurch gekennzeichnet,**
**dass** das Käseprodukt ohne Polysaccharid - Zugabe hergestellt wird.

13. Verfahren nach einem der vorhergehenden Ansprüche,
**dadurch gekennzeichnet,**
**dass** die Käsemasse zu Scheiben geformt und dann abgepackt wird, wobei bevorzugt hierzu die heiße Käsemasse zunächst zu einer Bandform geformt und die Bandform abgekühlt und dann in Scheiben zerteilt wird, oder dass die Käsemasse im heißen Zustand in eine Hülle oder Form gefüllt wird, oder dass die abgekühlte Käsemasse zu Käsepartikeln, insbesondere Stiften, oder Würfeln zerkleinert und dann abgepackt wird, wobei bevorzugt hierzu die heiße Käsemasse zunächst zu einer Bandform geformt und die Bandform abgekühlt und dann zu Käsepartikeln, insbesondere durch Reiben oder Schneiden, verarbeitet wird.

14. Verfahren nach einem der vorhergehenden Ansprüche,
**dadurch gekennzeichnet,**
**dass** Schritt b) mittels Direktdampfzugabe oder indirekter Beheizung, insbesondere in einem mindestens zwei in unterschiedliche Drehrichtungen antreibbaren Wellen umfassenden Wellenkocher, bevorzugt bei einer Wellendrehzahl von maximal 200 U/min, insbesondere maximal 150 U/min durchgeführt wird.

15. Verfahren nach einem der vorhergehenden Ansprüche,
**dadurch gekennzeichnet,**
**dass** der Schritt b) in einem Temperaturbereich zwischen 60°C und 90°C, weiter bevorzugt zwischen 60°C und 88°C durchgeführt wird, besonders bevorzugt bei einer Temperatur über 73°C, insbesondere in einem Temperaturbereich zwischen 62°C und 65°C, oder zwischen 66°C und 69°C, oder zwischen 70°C und 79°C, oder zwischen 80°C und 85°C, oder zwischen 74°C und 90°C.

16. Verfahren nach einem der vorhergehenden Ansprüche,
**dadurch gekennzeichnet,**
**dass** vor und/oder während der Durchführung des Schrittes b) Farbstoffe und/oder Aromen und/oder Kräuter und/oder Gewürze und/oder Lebensmittel, wie beispielsweise Schinken oder Gemüse dem milchoriginären Ausgangsmaterial zugegeben werden.

17. Verfahren nach einem der vorhergehenden Ansprüche,
**dadurch gekennzeichnet,**
**dass** vor und/oder während des Schrittes b), zusätzlich zu einer etwaigen aus einer Direktdampferhitzung resultierenden Kondensatmenge Wasser in mehreren, bevorzugt ausschließlich zwei, zeitlich beabstandeten Gaben zugegeben wird, bevorzugt mit einem Gewichtsanteil bezogen auf die Käsemasse aus einem Wertebereich zwischen 2 Gew.-% und 18 Gew.-%, bevorzugt zwischen 4 Gew.-% und 12 Gew.-%.

18. Verfahren nach einem der vorhergehenden Ansprüche,
**dadurch gekennzeichnet,**
**dass** die Dehnfähigkeit des Käseproduktes nach REPARET und NOËL (2003) und mit der Methode wie in der Anmeldung beschrieben >3N, bevorzugt >3,3N, besonders bevorzugt zwischen 3,1N und 4,8N, noch weiter bevorzugt zwischen 3,4N und 4,5N beträgt.

## Claims

1. A method for producing a fibrous cheese product, in particular to be consumed while hot, having the following steps:
a) providing a cheese source material (1) having a minimum weight proportion of 50 wt.-% of bacterially matured cheese and/or pasta filata type cheese;
b) heating, kneading and stretching the cheese material and obtaining a cheese mass;
c) forming the hot cheese mass;
d) cooling the cheese mass, the hot cheese mass not being cooled in contact with salt water, preferably without being in contact with water, as well as the cooled cheese mass not being stored in contact with salt water, in particular without being in contact with water,
**characterized in that**
before and/or during the implementation of step b), whey protein and/or milk protein is added in powder form as a source of protein, the weight proportion of the source of protein being between 0.5 wt.-% and 7 wt.-%, in relation to the cheese mass, and **in that** step b) is carried out until the obtained cheese mass has a fibrous texture, and **in that** no emulsifying salts are added before, while or after implementing step b), and **in that** the cheese source material (1) has a weight proportion of less than 20 wt.-% of curd, in particular of 0 wt.-% (without curd).

2. The method according to claim 1,
**characterized in that**
the whey protein-to-casein weight ratio of the cheese mass is set to a value lesser than or equal to 1 : 20, preferably to a value lesser than or equal to 1 : 30, and/or **in that** the whey protein-to-casein weight ratio of the cheese mass is set to a ratio ranging between 1 : 20 to 1 : 80, in particular between 1 : 30 and 1 : 80, even more preferably between 1 : 40 and 1 : 80.

3. The method according to claim 1 or 2,
**characterized in that**
the weight proportion of the source of protein is between 1 wt.-% and 5 wt.-% in relation to the cheese mass.

4. The method according to any one of the claims 1 to 3,
**characterized in that**
before and/or while implementing step b), a polysaccharide source, in particular a starch source, and/or a lactose source, in particular milk powder and/or whey powder, is added.

5. The method according to any one of the preceding claims,
**characterized in that**
no acidity regulator is added before, while or after implementing step b).

6. The method according to any one of the preceding claims,
**characterized in that**
during steps a) to d), no starter cultures, not even in the form of spores, are added and/or **in that** the cheese mass is cooled to a temperature of less than 10 °C, preferably to a temperature of less than 8 °C, more preferably to a temperature between 1 °C and 7 °C, particularly preferably to a temperature between 4 °C and 6 °C, in less than 24 h, preferably in less than 12 h, more preferably in less than 6 h, more preferably in less than 2 h, more preferably in less than 1 h, particularly preferably directly following step c).

7. The method according to any one of the preceding claims,
**characterized in that**
cooling and forming, preferably into slices, cubes or sticks, follow step b), and **in that** the cheese product is packaged, preferably directly, after being formed and cooled without being temporarily stored for more than one day, particularly preferably without being stored at all, preferably inline.

8. The method according to any one of the preceding claims,
**characterized in that**
step b) is implemented in batches and/or **in that** after step b) forming and cooling, preferably packaging as well, are carried out inline, in particular by the hot cheese mass being supplied to corresponding cooling, forming and, if required, packaging means after step b).

9. The method according to any one of the preceding claims,
**characterized in that**
the cheese source material comprises a mixture made of at least two ingredients (cheeses) from the following group of ingredients or consists thereof: bacterially matured cheese, unripened pasta filata type cheese, bacterially matured pasta filata type cheese; and/or **in that** the cheese source material comprises a mixture made of at least two different kinds of bacterially matured cheese or consists thereof; and/or **in that** the cheese source material comprises a mixture made of at least two different kinds of pasta filata type cheeses or consists thereof; and/or **in that** the cheese source material comprises a mixture made of at least two bacterially matured cheeses differing in regard to their degree of maturity or consists thereof; and/or **in that** the cheese source material comprises a mixture made of at least two pasta filata type cheeses differing in regard to their degree of maturity or consists thereof.

10. The method according to any one of the preceding claims,
**characterized in that**
the cheese source material (1) has a weight proportion of curd lesser than 10 wt.-%, preferably lesser than 5 wt.-%.

11. The method according to any one of the preceding claims,
**characterized in that**
the weight proportion of the cheese source material (1) to the cheese mass is at least 50 wt.-%, preferably at least 65 wt.-%, more preferably between 65 wt.-% and 80 wt.-% or more, and/or **in that** the weight proportion of bacterially matured cheese and/or pasta filata type cheese to the cheese source material is at least 60 wt.-%, preferably at least 70 wt.-%, more preferably at least 80 wt.-%, particularly preferably 90 wt.-%, more preferably 100 wt.-%.

12. The method according to any one of the preceding claims,
**characterized in that**
the cheese product is produced without adding polysaccharides.

13. The method according to any one of the preceding claims,
**characterized in that**
the cheese mass is formed into slices and then packaged, wherein preferably for this purpose, the hot cheese mass first is formed into a strip shape which is then cooled and cut into slices, or **in that** the cheese mass is filled into a casing or form while still hot, or **in that** the cooled cheese mass is reduced to cheese particles, in particular sticks or cubes, and then packaged, wherein preferably for this purpose, the hot cheese mass is first formed into a strip shape which is cooled and then processed to cheese particles, in particular by grating or cutting.

14. The method according to any one of the preceding claims,
**characterized in that**
step b) is implemented by supplying steam directly or by indirect heating, in particular in a shaft cooker comprising at least two shafts which can be driven in at least two different rotating directions, preferably at a shaft rotation speed of maximal 200 rpm, in particular maximal 150 rpm.

15. The method according to any one of the preceding claims,
**characterized in that**
step b) is implemented at a temperature ranging from 60 °C and 90 °C, more preferably between 60 °C and 88 °C, particularly preferably at a temperature over 73 °C, in particular at a temperature ranging between 62 °C and 65 °C or between 66 °C and 69 °C or between 70 °C and 79 °C or between 80 °C and 85 °C or between 74 °C and 90 °C.

16. The method according to any one of the preceding claims,
**characterized in that**
before and/or while implementing step b), colorants and/or aromas and/or herbs and/or spices and/or foodstuffs, such as ham or vegetables, are added to the source material made originally of milk.

17. The method according to any one of the preceding claims,
**characterized in that**
before and/or while implementing step b), water is added in several, preferably only two, temporally spaced dosages additionally to an approximate condensation amount resulting from direct steam heating, preferably having a weight proportion in relation to the cheese mass ranging between 2 wt.-% and 18 wt.-%, preferably between 4 wt.-% and 12 wt.-%.

18. The method according to any one of the preceding claims,
**characterized in that**
the stretchability of the cheese product according to REPARET and NOËL (2003) and using the process described in the application is > 3 N, preferably > 3.3 N, particularly preferably between 3.1 N and 4.8 N, more preferably between 3.4 N and 4.5 N.

## Revendications

1. Procédé pour la production d'un produit de fromage fibreux, en particulier à être consommé chaud, ayant les étapes suivants :
a) tenir disponible une matière première de fromage (1) ayant une proportion de poids minimale de 50 % en poids du fromage affiné avec de bactéries et/ou du fromage à pâte filée ;
b) chauffer, pétrir et étendre la matière de fromage et obtenir une masse de fromage ;
c) former la masse de fromage chaude ;
d) refroidir la masse de fromage, ladite masse de fromage chaude n'étant pas refroidi en contact avec de l'eau salée, préférablement sans être en contact avec de l'eau, et ladite masse de fromage refroidie n'étant pas stockée en contact avec de l'eau salée, en particulier sans être en contact avec de l'eau,
**caractérisé en ce que**
avant et/ou pendant l'implémentation de l'étape b), de la protéine de lactosérum et/ou de la protéine de lait est ajoutée en forme de poudre comme une source de protéine, le rapport de poids de la source de protéine est entre 0,5 % en poids et 7 % en poids, en relation de la masse de fromage, et **en ce que** l'étape b) est implémenté jusqu'à la masse de fromage obtenue a une texture fibreuse, et **en ce que** pas des sels émulsifiants sont ajoutés avant, pendant ou après l'implémentation de l'étape b), et **en ce que** la matière première de fromage (1) a un rapport de poids de moins de 20 % en poids de caillé, en particulier de 0 % en poids (sans caillé).

2. Procédé selon la revendication 1,
**caractérisé en ce que**
le rapport de poids protéine de lactosérum/caséine de la masse de fromage est ajusté à une valeur moins de 1 : 20, préférablement moins de ou égale à 1 : 30, et/ou **en ce que** le rapport de poids protéine de lactosérum/caséine de la masse de fromage est ajusté à une valeur de rapport d'un gamme de valeur entre 1 : 20 à 1 : 80, en particulier entre 1 : 30 et 1 : 80, plus préférablement entre 1 : 40 et 1 : 80.

3. Procédé selon la revendication 1 ou 2,
**caractérisé en ce que**
le rapport de poids de la source de protéine est entre 1 % en poids et 5 % en poids en relation à la masse de fromage.

4. Procédé selon l'une quelconque des revendications 1 à 3,
**caractérisé en ce que**
avant et/ou pendant l'implémentation de l'étape b), une source de polysaccharide, en particulier une source d'amidon, et/ou une source de lactose, en particulier du lait en poudre et/ou de la poudre de lactosérum, est ajoutée.

5. Procédé selon l'une quelconque des revendications précédentes,
**caractérisé en ce que**
pas de régulateur d'acidité est ajouté avant, pendant ou après l'implémentation de l'étape b).

6. Procédé selon l'une quelconque des revendications précédentes,
**caractérisé en ce que**
pendant les étapes a) à d), pas de cultures de démarrage, même pas en forme de spores, sont ajoutées et/ou **en ce que** la masse de fromage est refroidie à une température de moins de 10 °C, préférablement à une température de moins de 8 °C, plus préférablement à une température entre 1 °C et 7 °C, de préférence particulière entre 4 °C et 6 °C, en moins de 24 h, préférablement en moins de 12 h, plus préférablement en moins de 6 h, plus préférablement en moins de 2 h, plus préférablement en moins de 1 h, de préférence particulière immédiatement après l'étape c).

7. Procédé selon l'une quelconque des revendications précédentes,
**caractérisé en ce que**
le refroidissement et la formation, préférablement en tranches, cubes ou barres, suivent l'étape b), et **en ce que** le produit de fromage est emballé, préférablement immédiatement après la formation et le refroidissement sans être stocké temporairement pour plus qu'un jour, préférablement sans être stocké pas du tout, préférablement inline.

8. Procédé selon l'une quelconque des revendications précédentes,
**caractérisé en ce que**
l'étape b) est implémenté en lots et/ou **en ce que** après l'étape b) la formation et le refroidissement, préférablement ainsi que l'emballage, sont implémentés inline, en particulier par la masse de fromage chaude étant alimentée à des moyens respectives de refroidissement, de formation et, s'il y a lieu, d'emballage après l'étape b).

9. Procédé selon l'une quelconque des revendications précédentes,
**caractérisé en ce que**
la matière première de fromage comprend un mélange fait d'au moins deux ingrédients (fromages) du groupe d'ingrédients suivant ou se compose de ceci : fromage affiné avec des bactéries, fromage non affiné à pâte filée, fromage affiné avec des bactéries à pâte filée ; et/ou **en ce que** la matière première de fromage comprend un mélange fait d'au moins deux types différents du fromage affiné avec de bactéries ou se compose de ceci ; et/ou **en ce que** la matière première de fromage comprend un mélange fait d'au moins deux types différents du fromage à pâte filée ou se compose de ceci ; et/ou **en ce que** la matière première de fromage comprend une mélange fait d'au moins deux fromages affinés avec des bactéries, qui diffèrent les uns aux autres en regard de leur degré de maturité, ou se compose de ceci ; et/ou **en ce que** la matière première de fromage comprend un mélange fait d'au moins deux fromages à pâte filée, qui diffèrent en regard de leur degré maturité, ou se compose de ceci.

10. Procédé selon l'une quelconque des revendications précédentes,
**caractérisé en ce que**
la matière première de fromage (1) a un rapport de poids du caillé de moins de 10 % en poids, préférablement de moins de 5 % en poids.

11. Procédé selon l'une quelconque des revendications précédentes,
**caractérisé en ce que**
le rapport de poids de la matière première de fromage (1) à la masse de fromage est au moins 50 % en poids, préférablement au moins 65 % en poids, de préférence particulière entre 65 % en poids et 80 % en poids, ou plus et/ou **en ce que** le rapport de poids du fromage affiné avec des bactéries et/ou du fromage à pâte filée à la matière première de fromage est au moins 60 % en poids, préférablement au moins 70 % en poids, plus préférablement au moins 80 % en poids, de préférence particulière 90 % en poids, plus préférablement 100 % en poids.

12. Procédé selon l'une quelconque des revendications précédentes,
**caractérisé en ce que**
le produit de fromage est produit sans l'alimentation des polysaccharides.

13. Procédé selon l'une quelconque des revendications précédentes,
**caractérisé en ce que**
la masse de fromage est formée en tranches et puis emballée, dans lequel préférablement pour cet objet la masse de fromage chaude est formée initialement en forme de bande qui est ensuite refroidi et découpée en tranches, ou **en ce que** la masse de fromage est remplie dans un étui ou un moule quand la masse de fromage est encore chaude, ou **en ce que** la masse de fromage refroidie est réduite en taille à des particules de fromage, en particulier en bâtonnets ou cubes, et est ensuite emballée, dans lequel préférablement pour cet objet la masse de fromage chaude est formée initialement en forme de bande qui est refroidie et ensuite travaillée en particules de fromage, en particulier par râpage ou coupage.

14. Procédé selon l'une quelconque des revendications précédentes,
**caractérisé en ce que**
l'étape b) est implémenté par l'alimentation de vapeur directe ou par le chauffage indirect, en particulier dans un réchaud d'arbre comprenant au moins deux arbres qui peuvent être entraînés dans au moins deux sens de direction différent, préférablemeent à une vitesse de rotation de l'arbre de 200 tr/min au maximum, en particulier 150 tr/min au maximum.

15. Procédé selon l'une quelconque des revendications précédentes,
**caractérisé en ce que**
l'étape b) est implémenté à une température entre 60 °C à 90 °C, plus préférablement implémenté à une température entre 60 °C et 88 °C, de préférence particulière à une température dépassant 73 °C, en particulier à une température entre 62 °C à 65 °C ou entre 66 °C et 69 °C ou entre 70 °C et 79 °C ou entre 80 °C et 85 °C ou entre 74 °C et 90 °C.

16. Procédé selon l'une quelconque des revendications précédentes,
**caractérisé en ce qu'**
avant ou pendant l'implémentation l'étape b), des colorants et/ou des arômes et/ou des herbes et/ou des épices et/ou des aliments, tel que du jambon ou des légumes, sont ajoutés à la matière première fait originalement du lait.

17. Procédé selon l'une quelconque des revendications précédentes,
**caractérisé en ce que**
avant et/ou pendant l'implémentation l'étape b), de l'eau est ajoutée en plusieurs dosages espacés temporellement, préférablement seulement en deux dosages, en plus d'un amont de condensation approximatif résultant d'un chauffage de vapeur direct, préférablement ayant un rapport de poids entre 2 % en poids et 18 % en poids, préférablement entre 4 % en poids et 12 % en poids, en relation à la masse de fromage.

18. Procédé selon l'une quelconque des revendications précédentes,
**caractérisé en ce que**
l'élasticité du produit de fromage selon REPARET et NOËL (2003) et en utilisant le procédé décrit dans l'application est > 3 N, préférablement > 3,3 N, plus préférablement entre 3,1 N et 4,8 N, plus préférablement entre 3,4 N et 4,5 N.
